Europäisches Patentamt

European Patent Office

Office européen des brevets

(11) Publication number: **0 332 299**
**A1**

## EUROPEAN PATENT APPLICATION

(21) Application number: **89301372.2**

(22) Date of filing: **14.02.89**

(51) Int. Cl.⁴: **B65G 15/62 , A47F 9/04**

(30) Priority: **09.03.88 ZA 881684**

(43) Date of publication of application:
**13.09.89 Bulletin 89/37**

(84) Designated Contracting States:
**AT BE CH DE ES FR GB GR IT LI LU NL SE**

(71) Applicant: **Kovacs, Laszlo Endre**
**225 Iona Drive Hurlingham Extension 3**
**Johannesburg Transvaal(ZA)**

(72) Inventor: **Kovacs, Laszlo Endre**
**225 Iona Drive Hurlingham Extension 3**
**Johannesburg Transvaal(ZA)**

(74) Representative: **Bardo, Julian Eason et al**
**Abel & Imray Northumberland House 303-306**
**High Holborn**
**London, WC1V 7LH(GB)**

(54) **Check-out conveyor.**

(57) A check-out conveyor has spaced apart pulleys (10, 14), an endless belt (16) moving around the pulleys, a frame (24) presenting a supporting surface (26) for the upper run of the belt and side members (36, 38) alongside the belt. The side members (36, 38) define, with the frame (24), channels at the edges of the belt in which protruding formations at the edges of the belt run.

Fig 1

## CHECK-OUT CONVEYOR

### BACKGROUND OF THE INVENTION

THIS invention relates to a check-out conveyor.

Check-out conveyors are found in supermarkets and other shops where there are large numbers of purchaseed items to be presented individually to a till operator or to a bar code reader. In the known check-out conveyors, an endless belt passes around a driven pulley and an idling pulley and the items to be transported lie on the other run of the belt between the pulleys. Generally, the pulleys are somewhat wider than the belt and there is nothing restricting sideways movement of the belt. It is possible for a shopper or till operator to catch his fingers beneath the belt, possibly with disastrous consequences if the fingers are drawn about one of the pulleys.

Another safety-related disadvantage of the known belts is the fact that they are made endless by conventional splicing using wire lacing. As items are dropped onto the belt it is possible for the wire to break and then stand proud of the belt ready to cut a hand brushed over the belt.

A further disadvantage of the known check-out conveyors is the fact that they are not designed for disassembly for cleaning and maintenance purposes.

### SUMMARY OF THE INVENTION

According to the present invention there is provided a check-out conveyor comprising pulleys, an endless belt which moves around the pulleys in use, a frame presenting a supporting surface over which an operatively upper run of the belt moves in use and side members attached to or forming part of the frame and extending alongside the edges of the belt, characterised in that the side members and frame define channels to either side of the belt and in that the belt has elongate, protruding formations of flexible material at its edges which locate and move in the channels as the belt moves.

For ease of cleaning and maintenance, it is preferred that at least one of the side members is detachable from the frame. Preferably also, the conveyor comprises two spaced apart pulleys about which the belt moves, one of the pulleys being a motorised pulley and the other being an idling pulley, an end member spanning between the side members adjacent the idling pulley and tie means acting between the end member and the idling pulley, the tie means being adjustable in effective length to vary the spacing of the pulleys.

### BRIEF DESCRIPTION OF THE DRAWINGS

The invention will now be described in more detail, by way of example only, with reference to the accompanying drawings in which:

Figure 1 shows an exploded perspective view of a check-out conveyor according to the invention;

Figure 2 shows a perspective view of the assembled check-out conveyor; and

Figure 3 shows a cross-section at the line 3-3 in Figure 2.

### DESCRIPTION OF A PREFERRED EMBODIMENT

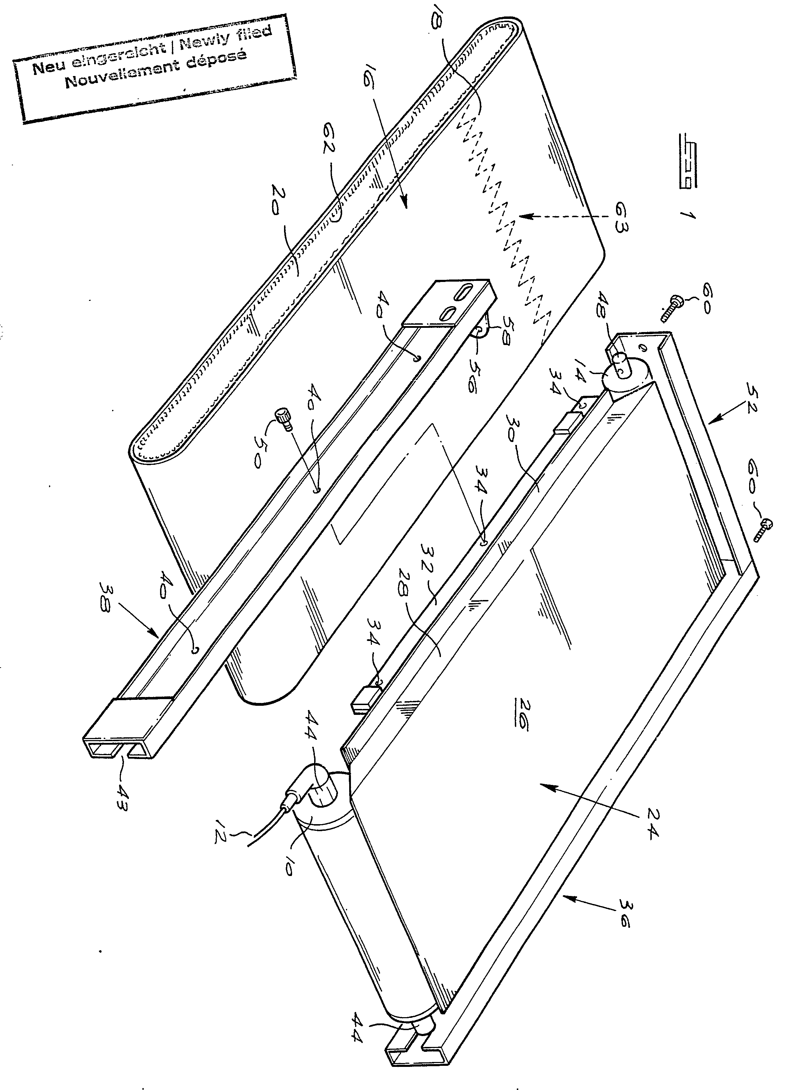

Referring initially to Figure 1, there is shown a motorised head pulley 10 powered to electricity conveyed through wires 12, an idling tail pulley 14 and an endless belt 16. The pulleys 10 and 14 are spaced apart with their axes parallel and the belt 16 passes around the pulleys with its upper run marked with the numeral 18 and its lower run marked with the numeral 20.

The upper run 18 of the pulley is supported by a frame 24 which has a flat central region 26 and downturned lips 28 along its opposite edges, the lips 28 terminating in outwardly directed flanges 30. Welded to the underside of the flange 30 on one side of the conveyor is a length 32 of flat bar formed with threaded holes 34 at intervals.

Channel-shaped side members 36 and 38 extend lengthwise alongside the edges of the frame 24. The side member 36 is fixed permanently by welding to the flange 30 on one side of the frame while the side member 38 is formed with holes 40 corresponding in position to the holes 34 in the flat bar on the other side of the frame.

One end of each side member is formed with a longitudinally extending slot 43 which receives one end 44 of the shaft supporting the head pulley 10, the ends 44 being formed with appropriate flats so that the shaft is fixed against rotation relative to the side members. Similarly, the opposite ends of the side members have slots which receive the ends 48 of the shaft of the idling pulley 14 in non-rotatable fashion. The side member 38 is secured to the frame by means of Allen screws 50 passing through the holes 40 and threaded into the holes 34.

There is an end member 52 spanning between the side members 36 and 38 at one end of the conveyor. This member is welded to the end of the side member 36 and is formed with a threaded hole which registers with a hole 56 in a bracket 58 at the end of the side member 38 when the latter side member is correctly positioned. A bolt passing through the hole 56 and threaded into the threaded hole secures the end member 52 relative to the side member 38.

Bolts 60 pass through holes in the ends of the side members and are threaded into threaded holes formed in the ends 48 of the shaft of the idling pulley 14. Clearly, manipulation of the bolts 60 results in movement of the pulley 14 towards or away from the pulley 10 for tensioning or loosening of the belt 16.

The belt 16 is of two-ply PVC (polyvinyl chloride) and spliced to form an endless loop, but this is achieved without the use of any lacing as in conventional systems. In this case, ends of the belt as initially formed with mating, jagged profiles 63 as illustrated in broken outline in Figure 1. The jagged profiles are heat sealed to one another once they have been mated.

Along its edges, the belt 16 carries inwardly protruding formations 62 of flexible material. The formations are formed with V-shaped notches at intervals as shown.

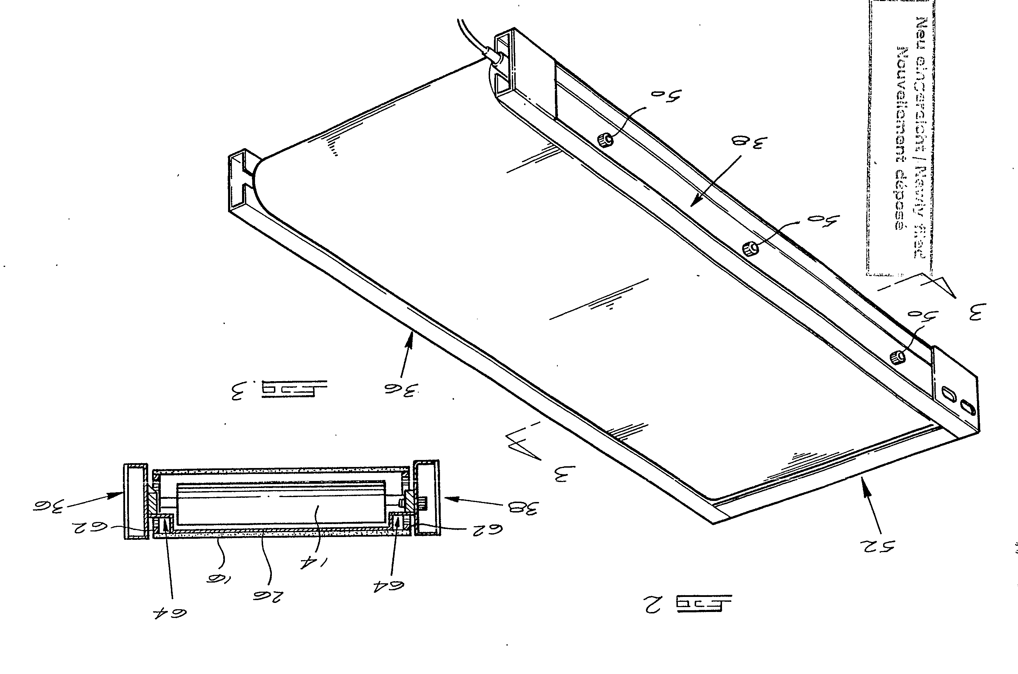

In the assembled conveyor, as illustrated in Figure 3, the formations 62 locate in channels 64 defined by the frame 24 and the side members 36 and 38. The upper surface of the belt 16 lies flush with the upper surfaces of the side members 36 and 38 and the width of the belt is only very slightly less than the clear spacing between the side members. With this arrangement, it will be difficult for a person to raise the belt, especially if it is properly tensioned, and get one or more fingers under the formations 62. Accordingly, there is little likelihood of a person's fingers being drawn along to the head pulley 10. Of course, the provision of the formations 62 also prevents sideways movement of the belt on the pulleys and this also contributes to the safety of the conveyor by making it difficult for a person to get his fingers under the belt.

Besides the safety features offered by the illustrated embodiment, it also has an advantage as far as ease of disassembly for maintenance and cleaning is concerned. To gain access to the interior of the conveyor, it is only necessary to remove the Allen screws 50 and the appropriate bolts. The side member 38 can then be detached from the frame 24 and the belt 16 and pulleys 10 and 14 can be withdrawn with ease for replacement, cleaning or maintenance.

In use, the conveyor will be installed with its end portions concealed beneath plates forming part of a counter top beneath which the conveyor is situated.

## Claims

1. A check-out conveyor comprising pulleys (10,14), an endless belt (16) which moves around the pulleys in use, a frame (24) presenting a supporting surface (26) over which an operatively upper run (18) of the belt moves in use and side members (36, 38) attached to or forming part of the frame and extending alongside the edges of the belt, characterised in that the side members (36, 38) and frame (24) define channels (64) to either side of the belt (16) and in that the belt (16) has elongate, protruding formations (62) of flexible material at its edges which locate and move in the channels (64) as the belt (16) moves.

2. A check-out conveyor according to claim 1 characterised in that the frame (24) has a central section defining a flat supporting surface (26) for the upper run of the belt and edge sections (30) which, in combination with the side member, define the channels.

3. A check-out conveyor according to claim 1 or claim 2 characterised in that at least one of the side members (36, 38) is detachable from the frame (24).

4. A check-out conveyor according to any one of the preceding claims comprising two spaced apart pulleys (10, 14) about which the belt moves, one of the pulleys (10) being a motorised pulley and the other (14) being an idling pulley, an end member (52) spanning between the side members (36, 38) adjacent the idling pulley (14), characterised by tie means (60) acting between the end member (52) and the idling pulley (14), the tie means (60) being adjustable in effective length to vary the spacing of the pulleys (10, 14).

5. A check-out conveyor according to any one of the preceding claims characterised in that the protruding formations (62) comprise strips of flexible material fixed to the belt (16), the strips being notched at intervals to facilitate bending thereof as the belt (16) moves around a pulley (10, 14).

6. A check-out conveyor according to any one of the preceding claims characterised in that the belt (16) is spliced (63) without the use of lacing.

Fig. 1

EP 0 332 299 A1

FIG 2

FIG. 3

52

3

50

50

38

50

3

36

64

26

14

64

62

16

38

62

36

## DOCUMENTS CONSIDERED TO BE RELEVANT

EP 89301372.2

| Category | Citation of document with indication, where appropriate, of relevant passages | Relevant to claim | CLASSIFICATION OF THE APPLICATION (Int. Cl.4) |
|---|---|---|---|
| Y | GB - A - 2 155 884 (HARTE WOODWORKING) <br> * Fig. 1; abstract * | 1,2 | B 65 G 15/62 <br> A 47 F 9/04 |
| Y | GB - A - 1 243 008 (ATOMIC ENERGY) <br> * Fig. 2; page 1, lines 64-66 * | 1,2 | |
| A | US - A - 4 650 067 (BRULE) <br> * Fig. 4 * | 1,3 | |
| A | GB - A - 1 554 539 (IRA STEPHENS) <br> * Fig. 1 * | 1 | |
| A | GB - A - 1 083 536 (ANZEN SAKUDO) <br> * Fig. 3 * | 1 | TECHNICAL FIELDS SEARCHED (Int. Cl.4) <br><br> A 47 F <br> B 65 G |

The present search report has been drawn up for all claims

| Place of search | Date of completion of the search | Examiner |
|---|---|---|
| VIENNA | 03-05-1989 | BAUMGARTNER |